# FASCICULE DE BREVET EUROPEEN

(11) **EP 1 030 132 B1**
(45) Date de publication et mention de la délivrance du brevet: **26.01.2005**
(21) Numéro de dépôt: 00410017.8
(22) Date de dépôt: 18.02.2000
(51) Int. Cl.: F24J 2/04, E04D 3/06

(54) **Dispositif de fixation de panneaux élémentaires d'un capteur solaire**
Verfahren zur Befestigung von Sonnenkollektor-Panelen
Process for mounting solar collector panels

(30) Priorité: 19.02.1999 FR 9902317
(43) Date de publication de la demande: 23.08.2000
(73) Titulaire: Clipsol, 73100 Trevlgnin (FR)
(72) Inventeur: André, Jean, 73100 Trévignin (FR)
(74) Mandataire: Hecké, Gérard

(56) Documents cités:
- EP-A- 0 314 052
- EP-A- 0 610 102
- EP-A- 0 864 708
- DE-A- 3 048 113
- DE-A- 3 108 356
- DE-A- 4 007 247
- FR-A- 2 408 018
- FR-A- 2 516 964
- GB-A- 2 000 860

## Description

### Domaine technique de l'invention

L'invention est relative à un capteur solaire composé d'une pluralité de modules de captage élémentaires, et comprenant :
- une structure porteuse à base de profilés (PR) s'étendant verticalement le long de la pente d'un toit avec un espacement horizontal prédéterminé, et comportant une première série de supports de vitrage coopérant avec une deuxième série de parcloses pour assurer le pincement des bords opposés de vitres constituant la couverture transparente du capteur,
- chaque support de vitrage ayant une âme centrale réunie à deux ailes latérales divergentes comportant à chaque extrémité un premier rebord horizontal de logement d'un joint sur lequel repose l'une des vitres,
- chaque parclose étant dotée d'une chape possédant à chaque extrémité un deuxième rebord horizontal de logement d'un joint disposé en regard dudit premier rebord,
- une première patte de clipsage solidaire de chaque aile du support de vitrage étant destinée à s'emboîter par verrouillage sur une deuxième patte de clipsage de la parclose correspondante pour constituer une liaison d'accouplement. sans jeu après emboîtement, lesdites pattes faisant saillie des plans respectifs passant par les joints des premiers et deuxièmes rebords, la première patte de clipsage comportant un bec d'accrochage orienté en sens opposé d'un bec d'accrochage de la deuxième patte de clipsage,
- et des moyens de fixation des parcloses sur la structure porteuse.

Un tel capteur solaire est généralement utilisé pour le chauffage d'air ou de liquide, avec ou sans stockage d'énergie, notamment :
- le chauffage d'un liquide caloporteur en circuit bouclé,
- le chauffage direct d'eau sanitaire ou d'eau de piscine.

L'installation de ces capteurs peut s'effectuer sur un support indépendant prenant par exemple appui sur le sol, ou par intégration dans la couverture de la toiture d'un immeuble ou d'une maison individuelle.

### Etat de la technique

Le document FR-A-2516964 décrit un système d'assemblage de panneaux de verre sur une ossature en bois autorisant l'installation du capteur sur le site. Le système d'assemblage fait usage d'une pluralité de profilés montés en opposition pour effectuer le pincement des panneaux. La structure des profilés permet des zones de chevauchement qui dépendent du nombre des panneaux, l'appui d'un profilé sur l'autre s'effectuant par l'intermédiaire de l'âme d'un des profilés coopérant par emboîtement avec des nervures de l'autre profilé pour autoriser le recouvrement de deux panneaux adjacents. Les moyens de fixation des panneaux de verre pincés entre les profilés de maintien sont constitués par des tiges traversant des trous des profilés, chaque tige d'assemblage ayant une extrémité inférieure agencée en tire-fond vissé dans la charpente, et une extrémité supérieure destinée à recevoir un écrou de blocage. La fixation individuelle des écrous nécessite un couple de serrage prédéterminé pour obtenir un assemblage correct et régulier des panneaux évitant notamment la formation de contraintes mécaniques dans les panneaux de verre. Le montage d'un tel capteur solaire est long et compliqué.

Le document FR-A-2408018 décrit un dispositif de fixation pour un capteur solaire utilisant des profilés d'assemblage avec emboîtement d'une partie mâle et d'une partie femelle autorisant un certain jeu au-delà de la position d'emboîtement. Les profilés présentent des structures encombrantes et d'un poids élevé, et sont reliés par clipsage en créant une liaison mécanique ponctuelle dans la zone centrale.

### Objet de l'invention

L'objet de l'invention consiste à réaliser un dispositif de fixation de panneaux élémentaires permettant de simplifier le montage d'un panneau solaire sur le site, et d'alléger l'ossature de support des panneaux.

Le dispositif de fixation selon l'invention est caractérisé en ce que :
- les ailes de chaque support de vitrage sont dotées de moyens de butées dirigées vers l'intérieur pour constituer une surface d'appui permettant le chevauchement de deux supports de vitrage,
- les deux premières pattes de clipsage sont disposées sur les ailes en étant séparées l'une de l'autre par l'âme pour obtenir une poutre rigide suite à l'effet de compression de deux vitrages adjacents, qui est proche de la zone d'encliquetage des pattes de clipsage,
- les pattes de clipsage s'étendent de manière continue sur toute la longueur des profilés, lesquels sont réalisés en alliage d'aluminium extrudé, et permettant d'obtenir un effet de serrage régulier des vitres entre les joints.

L'effet de compression des deux vitrages adjacents constitue une poutre rigide empêchant tout effet de glissement longitudinal entre les deux profilés. Le poids des profilés en aluminium peut ainsi être réduit au minimum.

Selon une caractéristique de l'invention, une gorge de drainage est ménagée sur le premier rebord entre la première patte de clipsage, et le joint de chaque aile d'un support de vitrage.

Préférentiellement, les pattes de clipsage sont orientées l'une vers l'autre lors de l'emboîtement en s'étendant selon une direction sensiblement perpendiculaire par rapport aux rebords horizontaux correspondants.

Le montage de la structure porteuse est réalisé en positionnant les supports de vitrage sur la face d'appui des lices horizontales par l'intermédiaire de cales de maintien, chaque lice étant équipée d'entretoises en matériau isolant thermique constituant une zone de coupure thermique intégrée entre la structure porteuse et les modules de captage. Les lices sont clipsées sur des embases de fixation solidarisées à la charpente et ayant des moyens d'ajustement réglables en hauteur.

### Description sommaire des dessins

D'autres avantages et caractéristiques ressortiront plus clairement de la description qui va suivre d'un mode de réalisation de l'invention donné à titre d'exemple non limitatif, et représenté aux dessins annexés, dans lesquels:
- la figure 1 est une vue en coupe longitudinale selon la ligne 1-1 de la figure 1B d'un pan du capteur solaire ;
- la figure 1A montre une vue partielle de la figure 1 illustrant un détail de réalisation d'une vitre équipée d'un joint d'extrémité ;
- la figure 1B représente une vue globale en plan du capteur installé sur une toiture ;
- la figure 2 est une vue partielle à échelle agrandie de la figure 1 montrant le montage des supports de vitrage sur une lice solidaire d'une embase de fixation ;
- la figure 3 est une vue en coupe transversale selon la ligne 3-3 de la figure 1B illustrant le capteur avant la pose des parcloses ;
- les figures 4A et 4B représentent des vues en perspectives d'un assemblage de supports de vitrage ;
- la figure 5 est une vue identique de la figure 3 après emboîtement des parcloses sur les supports de vitrage ;
- la figure 6A est une vue identique de la figure 2 après mise en place d'une parclose sur le module inférieur ;
- la figure 6B est une vue en coupe de la boucle hydraulique du fluide caloporteur ;
- les figures 7A et 7B sont des vues en coupe d'un support de vitrage et d'une parclose avant leur emboîtement ;
- la figure 8 est une vue éclatée d'une embase de fixation à hauteur réglable ;
- la figure 9 est une vue en coupe d'une lice .

### Description d'un mode de réalisation préférentiel

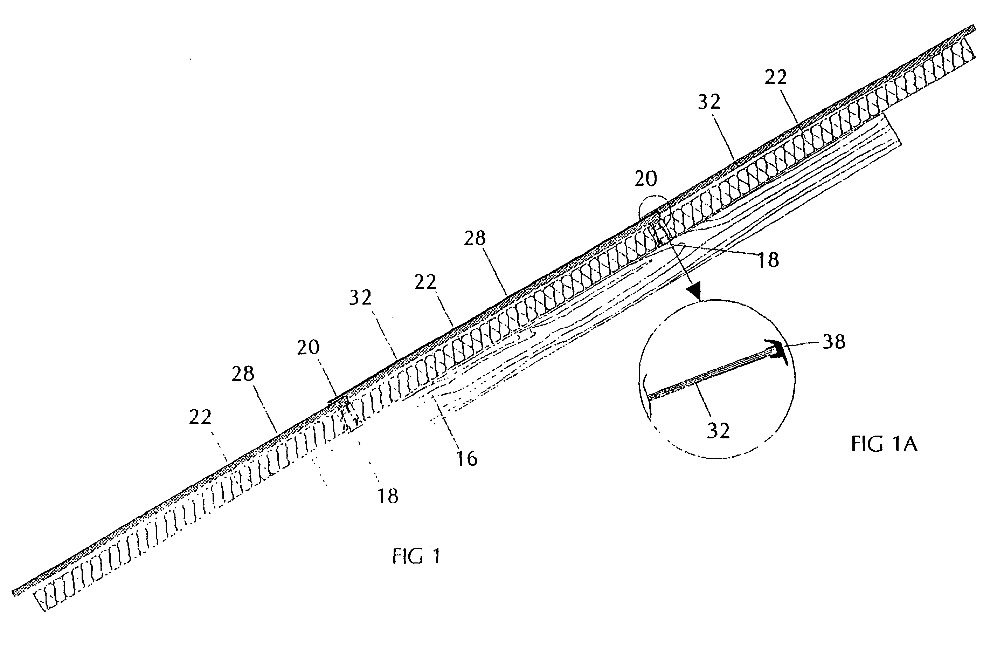

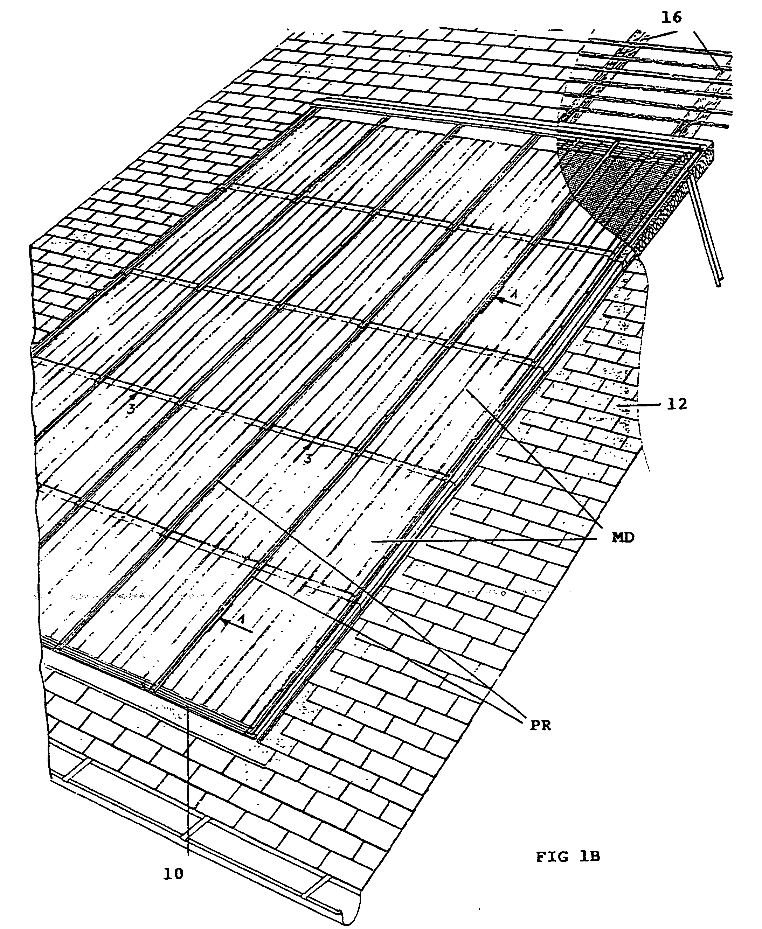

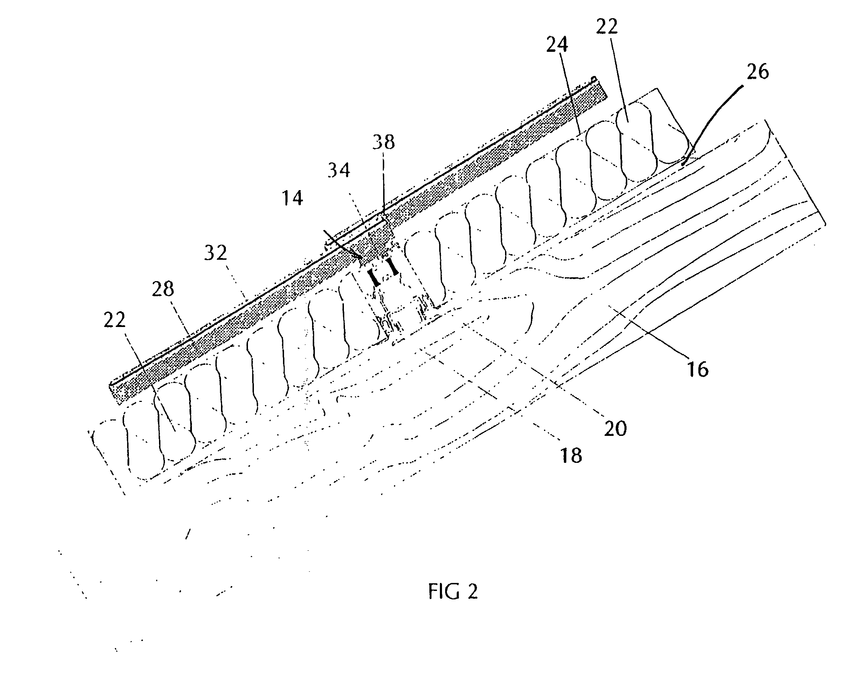

En référence aux figures 1, 1A,1B et 2 un capteur solidaire 10 à surface plane, et à circulation d'un fluide caloporteur est composé d'une pluralité de modules de captage MD élémentaires vitrés, disposés selon un montage en clin ou en tuile sur une couverture 12 du toit incliné d'un bâtiment ou de tout autre support.

Le capteur solaire 10 comporte une structure porteuse 14 composée de profilés PR en alliage d'aluminium extrudé, fixés sur les chevrons 16 de la charpente au moyen d'embases 18 de fixation à hauteur réglable, et de lices 20 horizontales.

Des panneaux d'isolation 22, notamment à base de laine de verre, sont insérés entre les ailes latérales des différentes lices 20 dans l'épaisseur de la structure porteuse 14. La face supérieure des panneaux d'isolation 22 est revêtue avantageusement d'un film 24 réflecteur du rayonnement infrarouge. Un espace de ventilation 26 est réservé entre la face inférieure des panneaux d'isolation 22 et l'isolation existante des combles.

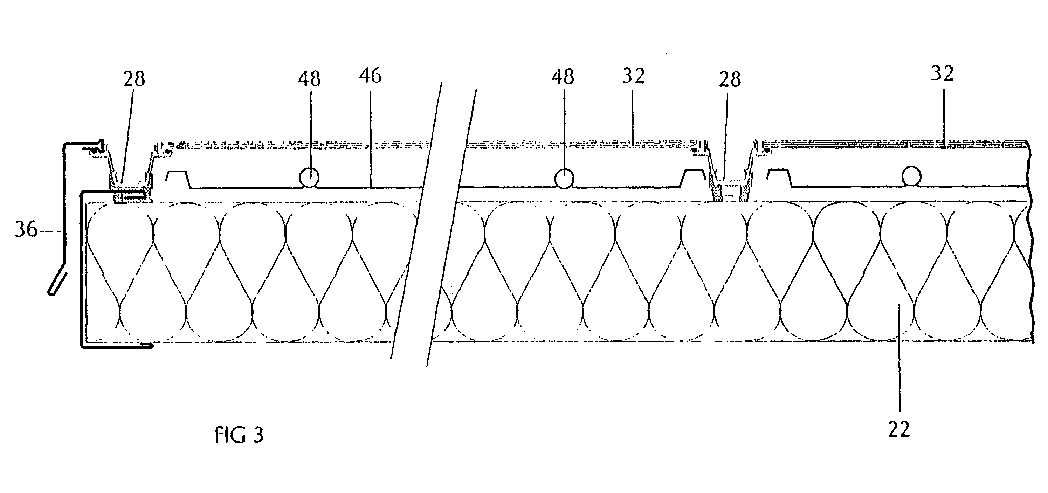

Sur les figures 3 à 6A, les profilés PR de la structure porteuse 14 comportent une première série de support de vitrage 28 coopérant par emboîtement avec une deuxième série de parcloses 30 pour la fixation des vitres 32 en verre trempé constituant la couverture transparente. Les profilés PR des supports de vitrage 28 s'étendent verticalement le long de la pente du toit selon un pas horizontal prédéterminé, et sont positionnés sur la face d'appui supérieure des lices 20 horizontales par l'intermédiaire de cales 34 de maintien réalisées par exemple en un matériau à base de silicone. Chaque support de vitrage 38 est agencé pour réceptionner deux vitres 32 juxtaposées de chaque paire de modules MD appartenant à deux rangs adjacents.

Une bande de rive 36 (figure 3) remplace la seconde vitre à l'extrémité latérale de la surface du capteur solaire 10.

Les différents supports de vitrage 28 sont disposés dans des plans parallèles espacés par un intervalle de faible épaisseur, par exemple 7 mm, pour autoriser le montage à clin des vitres 32 qui se recouvrent aux extrémités basses et hautes.

Chaque vitre 32 est équipée avantageusement d'un joint 38 à lèvres (figure 1A) collé sur le chant pour assurer l'étanchéité au niveau de la zone de recouvrement.

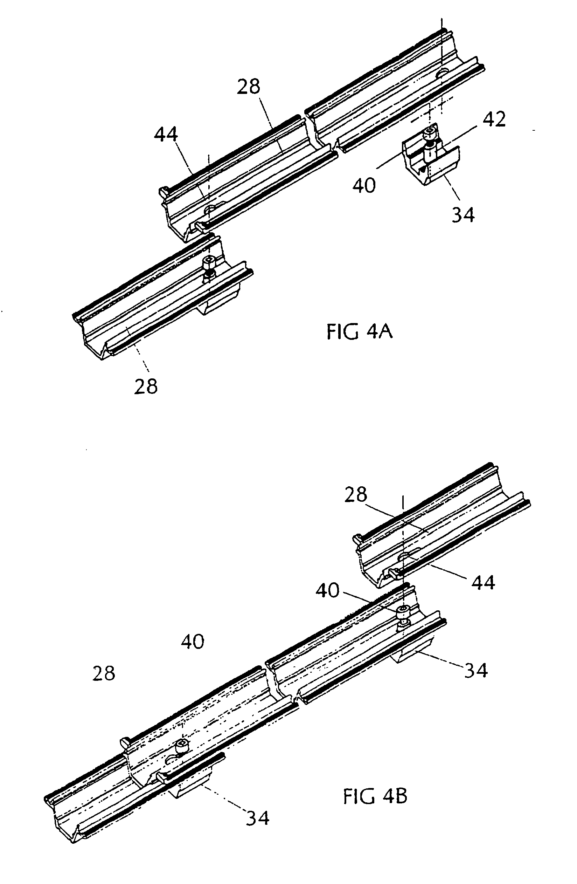

Sur les figures 4A et 4B, la pose des supports de vitrage 28 sur les lices 20 s'effectue au niveau de chaque rangée grâce à des vis 40 logées dans des implants 42 correspondants solidaires des lices 20. Le profil de chaque support de vitrage 28 est percé d'une boutonnière 44 à l'extrémité inférieure, et d'un trou à l'extrémité supérieure. Le support de vitrage 28 est déplacé vers le bas jusqu'à ce que le trou à l'extrémité supérieure vienne en face de la vis 40. La tête de vis 40 est alors prisonnière dans la fente de la boutonnière 44. La vis 40 est ensuite serrée définitivement, et le montage est poursuivi le long de toute la rangée jusqu'à la partie supérieure.

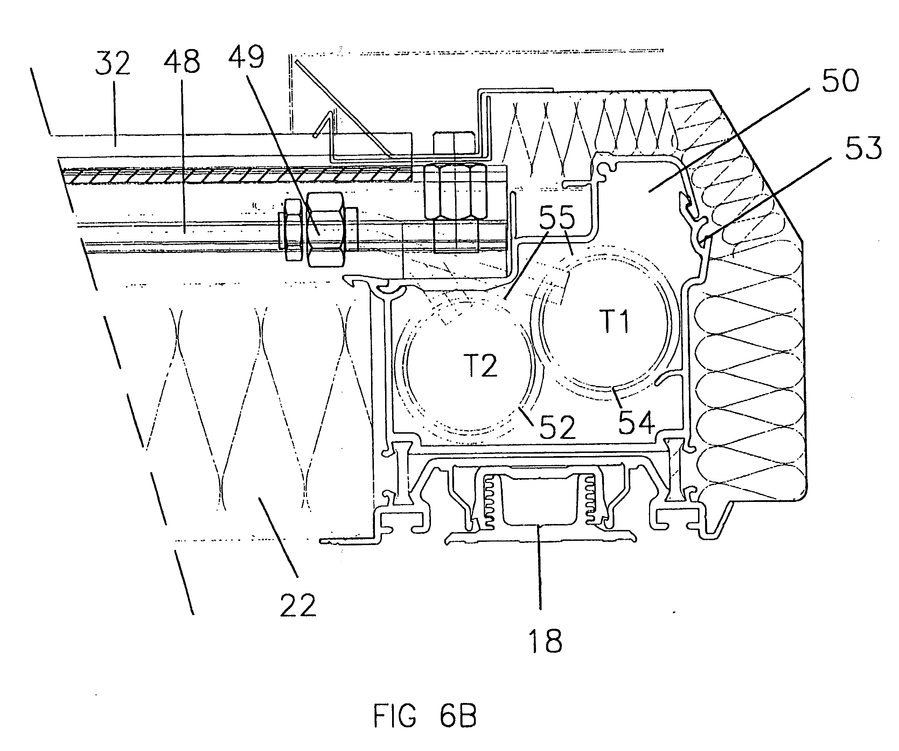

Avant la pose des vitres 32, des éléments absorbeurs 46 sont logés dans chaque module MD, en étant disposés entre deux rangées consécutives de supports de vitrage 28 selon une direction parallèle aux panneaux d'isolation 22 (figure 6B). Les éléments absorbeurs 46 sont constitués par des feuillards nervurés en cuivre, revêtus par une couche superficielle mince noire, par exemple une couche de nickel, et une couche de chrome noir, orientée du côté des vitres 32. Ils sont équipés de tubes de circulation 48 connectés par des raccords 49 à une boucle hydraulique 50 ayant deux collecteurs 52, 54, pour la circulation du fluide caloporteur. La boucle hydraulique 50 est située en partie haute, chaque élément absorbeur 46 étant maintenu en place par le raccordement hydraulique associé, autorisant ainsi des mouvements de déformation par dilatation thermique du feuillard. Les tubes 52, 54 sont isolés thermiquement des parois 53 en alliage léger par l'intermédiaire de manchons 55 tubulaires.

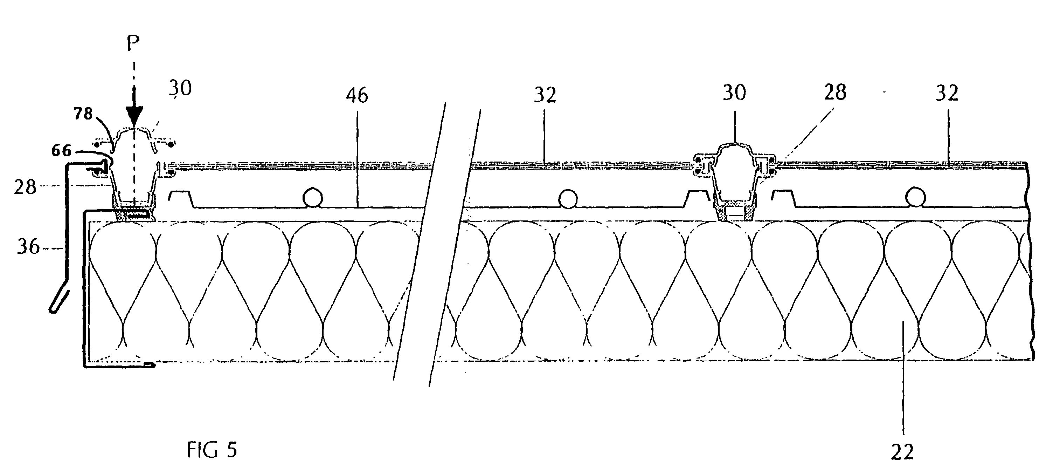

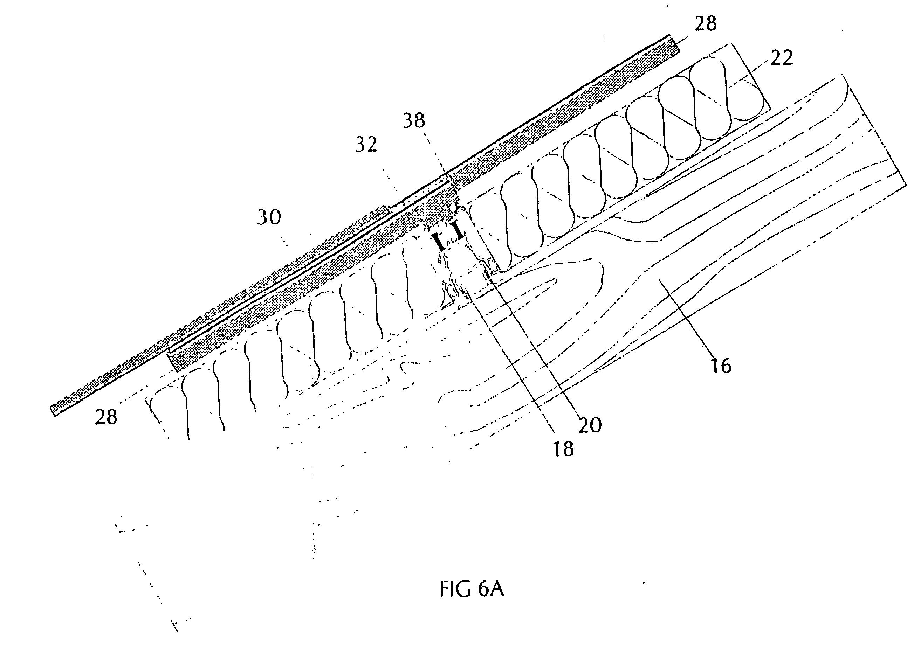

En référence aux figures 5 et 6A, la fixation des parcloses 30 s'effectue après la pose des vitres 32 par clipsage dans les supports de vitrage 28, grâce à une action de poussée indiquée par la flèche P. Le clipsage des parcloses 30 assure le maintien des bords des vitres 32, en exerçant un effort de serrage continu.

Le volume supérieur situé entre les éléments absorbeurs 46 et les vitres 32 forme une serre, destinée à réchauffer le liquide caloporteur circulant dans les tubes 48 du volume inférieur.

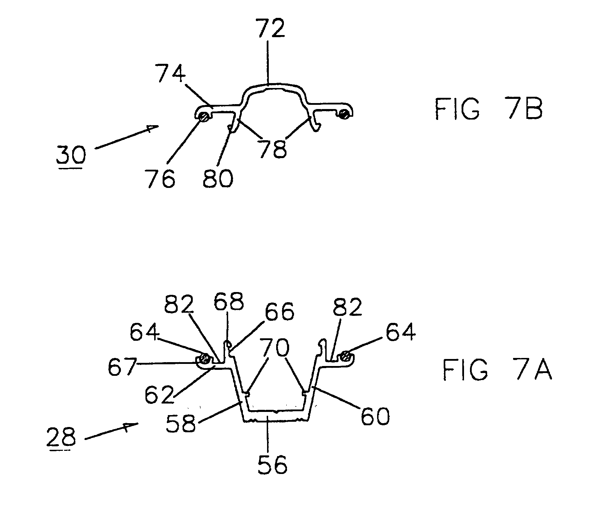

Sur la figure 7A, le profilé du support de vitrage 28 comporte une âme 56 centrale réunie à deux ailes 58, 60 latérales divergentes et symétriques par rapport au plan médian passant par l'âme 56. L'extrémité de chaque aile 58, 60 est dotée sur toute la longueur du profilé d'un premier rebord 62 de logement d'un joint 64, et d'une première patte 66 de clipsage. Le rebord 62 s'étend parallèlement à l'âme 56, et comprend une nervure 67 semi-circulaire dans laquelle se trouve le joint 64. La patte 66 de clipsage est sensiblement perpendiculaire au rebord 62, et est pourvue d'un bec d'accrochage 68 faisant saillie du plan horizontal passant par les joints 64. Chaque aile 58, 60 est pourvue d'une butée 70 dirigée vers l'intérieur pour constituer une surface d'appui lors du chevauchement de deux supports de vitrage 28, tel que montré à la figure 4B.

Sur la figure 7B, le profilé de la parclose 30 comporte sur toute la longueur une chape 72 en forme de C renversé, ayant à chaque extrémité un deuxième rebord 74 de logement d'un joint 76, et une deuxième patte 78 de clipsage. Le bec d'accrochage 80 de la deuxième patte 78 de clipsage est orienté en sens opposé par rapport à celui de la première patte 66, de manière à provoquer un verrouillage des deux becs d'accrochage 80, 68 lorsque la parclose 30 est emboîtée sur le support de vitrage 28 correspondant, en provoquant un pincement des vitres 32 entre les joints 64, 76 de sections circulaires (figure 5).

Une gorge 82 de drainage est ménagée sur le rebord 62 entre la première patte 66 de clipsage et la nervure 67 terminale de chaque aile 58, 60 du support de vitrage 28.

Toutes les vitres 32 d'une rangée reposent sur les joints 64 des supports de vitrage 28 en étant positionnées latéralement par les premières pattes de clipsage 66 dans des plans parallèles espacés de sept millimètres avec une zone de recouvrement de dix-huit millimètres environ.

La continuité des profilés au niveau des pattes de clipsage 66, 78 permet d'obtenir un serrage régulier des vitres 32 lors de l'emboîtement des parcloses 30 sur les supports de vitrage 28 correspondants. Il en résulte une très bonne tenue du capteur 10 suite aux contraintes climatiques et thermiques s'exerçant sur la couverture transparente.

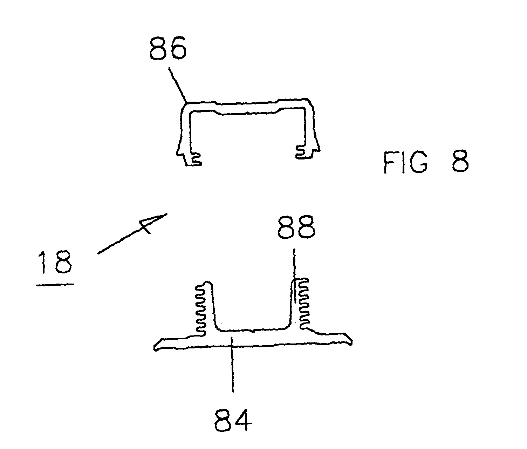

Sur la figure 8, une embase 18 de fixation comporte un support 84 fixe destiné à être vissé sur les chevrons 16, et une pièce d'appui 86 réglable en hauteur par ajustement dans une crémaillère 88 double du support 84.

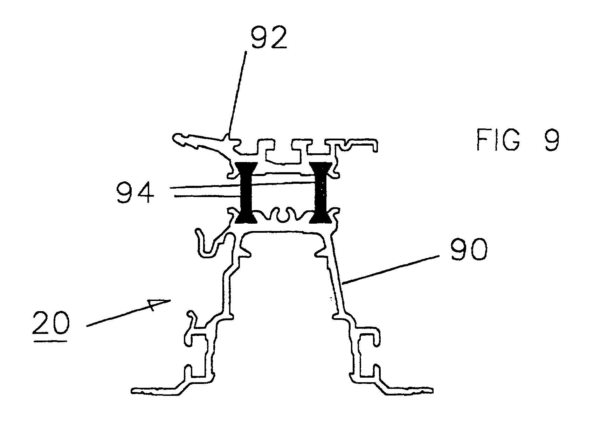

Sur la figure 9, la lice 20 est positionnée par clipsage sur la pièce d'appui 86 de l'embase 18, et est formée par un profilé ayant un corps 90 en forme de U renversé séparé du support 92 de la cale 34 par des entretoises 94 en matériau isolant thermique. La présence des entretoises 94 constitue une zone de coupure thermique intégrée dans la lice 20.

Selon une variante de réalisation (non représentée), la patte de clipsage 66, 78 des supports de vitrage 28 et des parcloses 30 peuvent être remplacés par des éléments de retenue emboîtables disposés ponctuellement à intervalles réguliers le long de la direction verticale d'alignement de chaque rang.

Il est clair que la même structure porteuse est utilisable lorsque les panneaux de verre sont remplacés par des panneaux solaires photovoltaïques. Dans ce cas l'absorbeur est supprimé.

## Revendications

1. Capteur solaire composé d'une pluralité de modules de captage (MD) élémentaires à circulation d'un fluide caloporteur, et comprenant :
- une structure porteuse (14) à base de profilés (PR) s'étendant verticalement le long de la pente d'un toit avec un espacement horizontal prédéterminé, et comportant une première série de supports de vitrage (28) coopérant avec une deuxième série de parcloses (30) pour assurer le pincement des bords opposés de vitres (32) constituant la couverture transparente du capteur,
- chaque support de vitrage (28) ayant une âme (56) centrale réunie à deux ailes (58, 60) latérales divergentes comportant à chaque extrémité un premier rebord (62) horizontal de logement d'un joint (64) sur lequel repose l'une des vitres (32),
- chaque parclose (30) étant dotée d'une chape (72) possédant à chaque extrémité un deuxième rebord (74) horizontal de logement d'un joint (76) disposé en regard dudit premier rebord (62),
- une première patte (66) de clipsage solidaire de chaque aile (58, 60) du support de vitrage (28) étant destinée à s'emboîter par verrouillage sur une deuxième patte (78) de clipsage de la parclose (30) correspondante pour constituer une liaison d'accouplement sans jeu après emboîtement, lesdites pattes (66, 78) faisant saillie des plans respectifs passant par les joints (64, 76) des premiers et deuxièmes rebords (62, 74), la première patte (66) de clipsage comportant un bec d'accrochage (68) orienté en sens opposé d'un bec d'accrochage (80) de la deuxième patte (78) de clipsage,
- et des moyens de fixation des parcloses (30) sur la structure porteuse (14),
**caractérisé en ce que** :
- les ailes (58, 60) de chaque support de vitrage (28) sont dotées de moyens de butées (70) dirigées vers l'intérieur pour constituer une surface d'appui permettant le chevauchement de deux supports de vitrage (28),
- les deux premières pattes (66) de clipsage sont disposées sur les ailes (58, 60) en étant séparées l'une de l'autre par l'âme (56) pour obtenir une poutre rigide suite à l'effet de compression de deux vitrages (28) adjacents, qui est proche de la zone d'encliquetage des pattes de clipsage,
- les pattes de clipsage (66, 78) s'étendent de manière continue sur toute la longueur des profilés (PR), lesquels sont réalisés en alliage d'aluminium extrudé, et permettant d'obtenir un effet de serrage régulier des vitres (32) entre les joints (64, 74).

2. Capteur solaire selon la revendication 1, **caractérisé en ce qu'**une gorge (82) de drainage est ménagée sur le premier rebord (62) entre la première patte (66) de clipsage, et le joint (64) de chaque aile (58, 60) d'un support de vitrage (28).

3. Capteur solaire selon la revendication 2, **caractérisé en ce que** les pattes de clipsage (68, 78) sont orientées l'une vers l'autre lors de l'emboîtement en s'étendant selon une direction sensiblement perpendiculaire par rapport aux rebords (62, 74) horizontaux correspondants.

4. Capteur solaire selon l'une des revendications 1 à 3, **caractérisé en ce que** les supports de vitrage (28) sont positionnés sur la face d'appui des lices (20) horizontales par l'intermédiaire de cales (34) de maintien, chaque lice (20) étant équipée d'entretoises (94) en matériau isolant thermique constituant une zone de coupure thermique intégrée entre la structure porteuse (14) et les modules de captage (MD).

5. Capteur solaire selon la revendication 4, **caractérisé en ce que** les lices (20) sont clipsées sur des embases (18) de fixation solidarisées à la charpente et ayant des moyens d'ajustement réglables en hauteur.

6. Capteur solaire selon l'une des revendications 1 à 5, **caractérisé en ce que** chaque module de captage (MD) renferme au moins un élément absorbeur (46) formé par une tôle nervurée ayant une bonne conductibilité thermique, et équipée de tubes de circulation (48) du fluide caloporteur.

## Claims

1. Solar collector composed of a plurality of elemental collection modules (MD) with circulation of heat conducting fluid, and comprising:
- a bearing structure (14) made up of sections (PR) extending vertically along the slope of a roof with a predetermined horizontal spacing, and comprising a first series of glass panel supports (28) operating in conjunction with a second series of glass beads (30) to perform gripping of the opposite edges of glass panels (32) constituting the transparent cover of the collector,
- each glass panel support (28) having a central body (56) joined to two divergent lateral wings (58, 60) comprising at each end a first horizontal rim (62) housing a seal (64) whereon one of the glass panels (32) rests,
- each glass bead (30) being provided with a cap (72) having at each end a second horizontal rim (74) housing a seal (76) arranged facing said first rim (62),
- a first clipping lug (66) integral to each wing (58, 60) of the glass panel support (28) being designed to be fitted by latching onto a second clipping lug (78) of the corresponding glass bead (30) to form a coupling link without clearance after fitting has been performed, said lugs (66, 78) being salient from the respective planes passing through the seals (64, 76) of the first and second rims (62, 74), the first clipping lug (66) comprising a latching tip (68) oriented in the opposite direction to a latching tip (80) of the second clipping lug (78),
- and means for fixing the glass beads (30) onto the bearing structure (14),
**characterized in that**:
- the wings (58, 60) of each glass panel support (28) are provided with stop means (70) directed inwards to form a bearing surface enabling two glass panel supports (28) to overlap,
- the two first clipping lugs (66) are arranged on the wings (58, 60) being separated from one another by the body (56) to obtain a rigid beam due to the compression effect of two adjacent glass panels (28), which is close to the clipping zone of the clipping lugs,
- the clipping lugs (66, 78) extend continuously over the whole length of the sections (PR) which are made of extruded aluminium alloy, enabling a regular clamping effect of the glass panels (32) to be obtained between the seals (64, 74).

2. Solar collector according to claim 1, **characterized in that** a draining groove (82) is arranged on the first rim (62) between the first clipping lug (66) and the seal (64) of each wing (58, 60) of a glass panel support (28).

3. Solar collector according to claim 2, **characterized in that** the clipping lugs (66, 78) are oriented towards one another when fitting is performed extending in a substantially perpendicular direction with respect to the corresponding horizontal rims (62, 74).

4. Solar collector according to one of the claims 1 to 3, **characterized in that** the glass panel supports (28) are positioned on the bearing face of the horizontal slats (20) by means of securing wedges (34), each slat (20) being equipped with spacers (94) made of thermal insulating material forming an integral thermal break zone between the bearing structure (14) and the collection modules (MD).

5. Solar collector according to claim 4, **characterized in that** the slats (20) are clipped onto fixing bases (18) secured to the framework and having adjustment means adjustable in height.

6. Solar collector according to one of the claims 1 to 5, **characterized in that** each collection module (MD) contains at least one absorbing element (46) formed by a ribbed metal plate having a good thermal conductibility and equipped with pipes (48) for circulation of the heat conducting fluid.

## Patentansprüche

1. Sonnenkollektor, der aus einer Vielzahl einzelner Aufnahmemodule (MD) besteht, in denen ein Wärmetransportmittel zirkuliert, und der umfasst:
- eine Tragkonstruktion (14) auf Basis von Profilen (PR), die sich vertikal entlang der Neigung eines Dachs mit einem vorbestimmten horizontalen Abstand voneinander erstrecken, und eine erste Reihe von Verglasungsträgern (28), die mit einer zweiten Reihe Halteleisten (30) zusammenwirken, die für ein Festklemmen der entgegengesetzten Kanten der Glasscheiben (32) sorgt, welche die lichtdurchlässige Decke des Kollektors bilden,
- wobei jeder Verglasungsträger (28) einen Mittelteil (56) aufweist, der mit zwei auseinanderstrebenden Seitenteilen (58, 60) verbunden ist, die an jedem Ende eine erste horizontale Leiste (62) zur Aufnahme einer Dichtung (64) umfassen, auf der jeweils eine Glasscheibe (32) aufliegt,
- wobei jede Halteleiste (30) mit einer Abdeckung (72) versehen ist, die an jedem Ende eine zweite horizontale Leiste (74) zur Aufnahme einer Dichtung (76) aufweist, die gegenüber der ersten Leiste (62) angeordnet ist,
- wobei eine erste Ansteckklaue (66), die fest mit den jeweiligen Seitenteilen (58, 60) des Verglasungsträgers (28) verbunden ist, dazu bestimmt ist, durch Ineinanderstecken an einer zweiten Befestigungszunge (78) der entsprechenden Halteleiste (30) verriegelt zu werden, um nach dem Ineinanderstekken eine feste Verbindung ohne Spiel zu bilden, wobei die Klauen (66, 68) aus den entsprechenden Ebenen herausstehen,
die durch die Dichtungen (64, 76) der ersten und zweiten Leiste (62, 74) führen, wobei die erste Ansteckklaue einen Verankerungshaken (68) aufweist, der entgegegensetzt zu einem Verankerungshaken (80) der zweiten Ansteckklaue (78) ausgerichtet ist,
- sowie Befestigungsmittel für die Halteleisten (30) an der Tragkonstruktion (14),
**dadurch gekennzeichnet, dass**
die Seitenteile (58, 60) jedes Verglasungsträgers (28) mit Anschlagmitteln (70) versehen sind, die nach innen gerichtet sind, um eine Anlagefläche zu bilden, die ein Überlappen zweier Verglasungsträger (28) ermöglicht,
wobei die beiden ersten Ansteckklauen (66) an den Seitenteilen (58, 60), getrennt durch den Mittelteil (56), angeordnet sind, damit beim Komprimieren zweier angrenzender Glasscheiben (28) ein starrer Träger entsteht, der sich nahe dem Einrastbereich der Ansteckklauen befindet,
- sich die Ansteckklauen (66, 78) fortlaufend über die ganze Länge der Profile (PR) erstrecken, die aus einer extrudierten Aluminiumlegierung bestehen und ein gleichmäßiges Einspannen der Glasscheiben (32) zwischen den Dichtungen ermöglichen (64, 74).

2. Sonnenkollektor nach Anspruch 1, **dadurch gekennzeichnet, dass** an der ersten Leiste (62) zwischen der ersten Ansteckklaue (66) und der Dichtung (64) jedes Seitenteils (58, 60) eines Verglasungsträgers (28) eine Entwässerungsrille (82) vorgesehen ist.

3. Sonnenkollektor nach Anspruch 2, **dadurch gekennzeichnet, dass** die Ansteckklauen (68, 78) beim Ineinanderstecken zueinander weisen und sich in einer im Wesentlichen senkrechten Richtung bezüglich der entsprechenden horizontalen Leisten (62, 74) erstrecken.

4. Sonnenkollektor nach einem der Ansprüche 1 bis 3, **dadurch gekennzeichnet, dass** die Verglasungsträger (28) an der Anlageseite der horizontalen Bahnen (20) mit Hilfe von Haltekeilen (34) positioniert sind, wobei jede Bahn (20) mit Abstandshaltem (94) aus thermisch isolierendem Material versehen ist, die einen Wärmetrennbereich bilden, der zwischen die Tragkonstruktion (14) und die Kollektormodule (MD) gesetzt ist.

5. Sonnenkollektor nach Anspruch 4, **dadurch gekennzeichnet, dass** die Bahnen (20) zwischen Befestigungssockeln (18) vorgesehen sind, die fest mit dem Rahmen verbunden sind und über höhenverstellbare Anpassungsmittel verfügen.

6. Sonnenkollektor nach einem der Ansprüche 1 bis 5, **dadurch gekennzeichnet, dass** jedes Kollektormodul (MD) mindestens ein Aufnahmeelement (46) einschließt, das von einem gerippten Blech mit guter Wärmeleitfähigkeit gebildet wird und mit Umlaufrohren (48) für das Wärmetransportmittel ausgestattet ist.
